# EUROPEAN PATENT APPLICATION

(11) **EP 3 662 797 A2**
(43) Date of publication of application: **10.06.2020**
(21) Application number: 19213019.3
(22) Date of filing: 02.12.2019
(51) Int. Cl.: A47J 39/00, A47J 47/06, A47J 36/02, A47J 27/12

(54) **FOOD CONTAINER SYSTEMS**

(30) Priority: 03.12.2018 US 201862774698 P
(71) Applicant: CAN'T LIVE WITHOUT IT, LLC, New York, NY 10011 (US)
(72) Inventor: Serrahima, Mario Quintana, Sour (LB); Burns, Clay Allen, New York, NY New York 10040 (US); Fleischer, Eric Charles, New York, NY New York 10024 (US)
(74) Representative: Thompson, Andrew John

(57) **Abstract**

A food container system may include a food container and a removable insert. The food container may include a container body defining a container cavity and a container lid adapted to couple with the container body. The removable insert may be configured to receive a food item and may include an insert body defining an insert cavity and an insert cap adapted to couple with the insert body. The removable insert may be sized and shaped to be received within the container cavity such that the container lid may be coupled to the container body when the removable insert is positioned within the container cavity. The food container may be configured to maintain a temperature of a food item positioned therein. The removable insert may comprise materials that may be microwaved or otherwise reheated such that the food item may be reheated within the removable insert.

## Description

### REFERENCE TO RELATED APPLICATIONS

This application claims the benefit of U.S. Provisional Application No. 62/774,698, filed December 3, 2018, entitled "FOOD CONTAINER SYSTEMS," the entire contents of which are incorporated herein by reference.

### FIELD OF THE INVENTION

This application relates to food container systems, and more specifically but not exclusively, to food containers systems for storing food for transport and later consumption.

### BACKGROUND

Food containers provide storage for food products allowing for storage and/or transport of the food products. Conventional food containers merely provide storage such that the contents of the food containers are subject to fluctuation in temperature pursuant to the ambient conditions. In some aspects it is desirable to maintain a desired temperature of a food product during transport and storage prior to eating. Additionally, the food container system can be used as a container from which the food product can be directly consumed. Some food containers have been developed to maintain consistent temperatures to the food products contained therein. However, these food containers are generally formed of metallic materials. As such, the food containers are not safe for heating in a microwave. In such cases, the food products cannot be easily reheated when they cool off. In some aspects, it is desirable to maintain a desired temperature of a food product when the food container is assembled. Moreover, it may be desirable to provide a means for easily reheating a food product.

### BRIEF SUMMARY OF THE INVENTION

The terms "invention," "the invention," "this invention" and "the present invention" used in this patent are intended to refer broadly to all of the subject matter of this patent and the patent claims below. Statements containing these terms should be understood not to limit the subject matter described herein or to limit the meaning or scope of the patent claims below. Embodiments of the invention covered by this patent are defined by the claims below, not this summary. This summary is a high-level overview of various aspects of the invention and introduces some of the concepts that are further described in the Detailed Description section below. This summary is not intended to identify key or essential features of the claimed subject matter, nor is it intended to be used in isolation to determine the scope of the claimed subject matter. The subject matter should be understood by reference to appropriate portions of the entire specification of this patent, any or all drawings and each claim.

Embodiments of the present invention are directed to food containers and food container systems. A food container may include a container body that may be formed of an insulating material and a container lid coupleable to the container body. The food container may further include a removable insert having an insert body and associated insert cap that can be positioned within the container body and retained therein when the container lid is coupled to the container body. Food may be stored within a cavity defined by the insert body. In some embodiments, the container body and container lid may provide for insulation of the food contained within the insert body during transportation and storage. In some embodiments a first food container may be stored within a second food container when the first food container has been emptied of its contents, for example to reduce the amount of space the containers take up when transporting empty containers home after they have been used for storing a snack or meal.

In some embodiments of the present invention, the food containers are of a size that makes them easily transportable so they can be carried to school, work, etc. The food containers may be sized and shaped so that they nest within each other for ease of storage. However, the food containers may be provided in any size or shape and are not limited to the illustrated sizes and shapes.

### BRIEF DESCRIPTION OF THE DRAWINGS

A further understanding of the nature and advantages of various embodiments may be realized by reference to the following figures. In the appended figures, similar components or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.
FIG. 1 is a front view of a food container system including a food container and a removable insert, according to embodiments of the present invention.
FIG. 2 is a perspective view of the container body and the container lid of the food container of FIG. 1 in a decoupled state, according to embodiments of the present invention.
FIG. 3 is a perspective view of the removable insert of the food container of FIG. 1.
FIG. 4A is a perspective view of the removable insert of the food container of FIG. 1 positioned within the interior of the container body of the food container of FIG. 1.
FIG. 4B is a perspective view of the removable insert of the food container of FIG. 1 partially removed from the interior of the container body of the food container of FIG. 1.
FIG. 5 is a cross-sectional view of the food container of FIG. 1 with the removable insert positioned within the container body.
FIG. 6 is a perspective view of another food container system including a food container and an additional food container, according to embodiments of the present invention.
FIG. 7 is perspective view of the food container of FIG. 6 with the handle in the stowed position.
FIG. 8 is a perspective view of the additional food container of FIG. 6 nested within the food container of FIG. 6, according to embodiments of the present invention.
FIG. 9 is a perspective view of an underside of a container lid of the container body of FIG. 6, according to embodiments of the present invention.
FIG. 10 is a cross-sectional view of the container lid of FIG. 9 taken along line 10-10, according to embodiments of the present invention.
FIG. 11 is a cross-sectional view of another food container, according to embodiments of the present invention.

### DETAILED DESCRIPTION OF THE INVENTION

The subject matter of embodiments of the present invention is described here with specificity to meet statutory requirements, but this description is not necessarily intended to limit the scope of the claims. The claimed subject matter may be embodied in other ways, may include different elements or steps, and may be used in conjunction with other existing or future technologies. This description should not be interpreted as implying any particular order or arrangement among or between various steps or elements except when the order of individual steps or arrangement of elements is explicitly described.

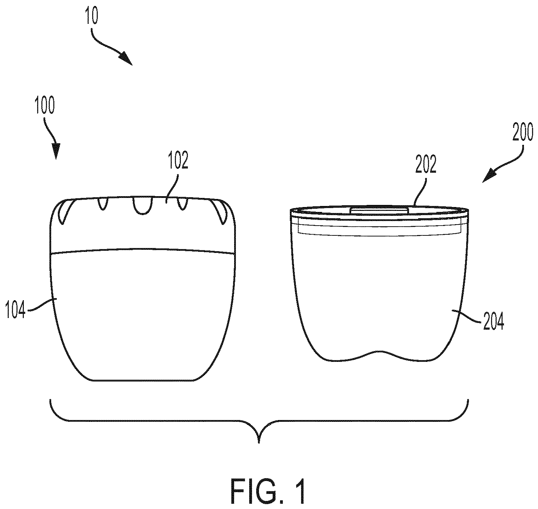

FIG. 1 depicts a front view of a food container system 10 that may include a food container 100 and a removable insert 200. The food container 100 may include a container body 104 defining a container cavity 106 and a container lid 102 that engages with the container body 104 so as to enclose the container cavity 106. The container lid 102 may engage with the container body 104 via any suitable mating features, for example, but not limited to, a threaded engagement. The removable insert 200 may include an insert body 204 defining an insert cavity 207 and insert cap 202 that may be coupled to the insert body 204 so as to enclose the insert cavity 207. The removable insert 200 may fit entirely within the container body 104 such that the container lid 102 may be coupled to the container body 104 while the removable insert 200 is positioned therein.

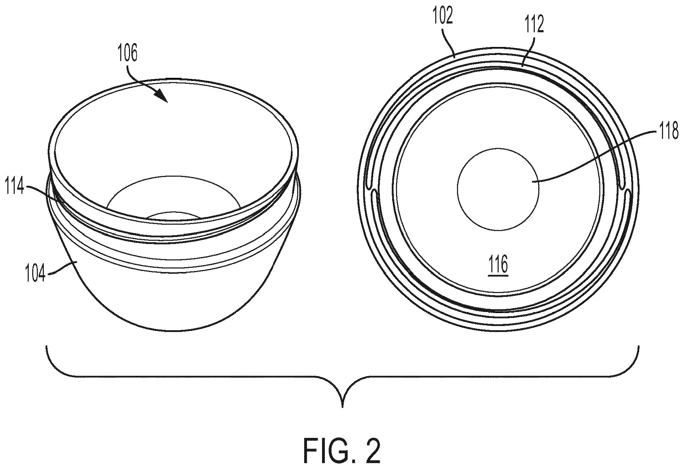

In one, non-limiting embodiment, as illustrated in FIG. 2, an outer wall of the container body 104 has at least one container body thread 114 and an inner wall of the container lid 102 has at least one container lid thread 112. When the container lid 102 engages with the container body 104, the at least one container body thread 114 interdigitates with the at least one container lid thread 112 to retain the container lid 102 on the container body 104. However, other retention methods may be used, including, but not limited to, snap-fit connection, twist-lock connection, or any other suitable connection.

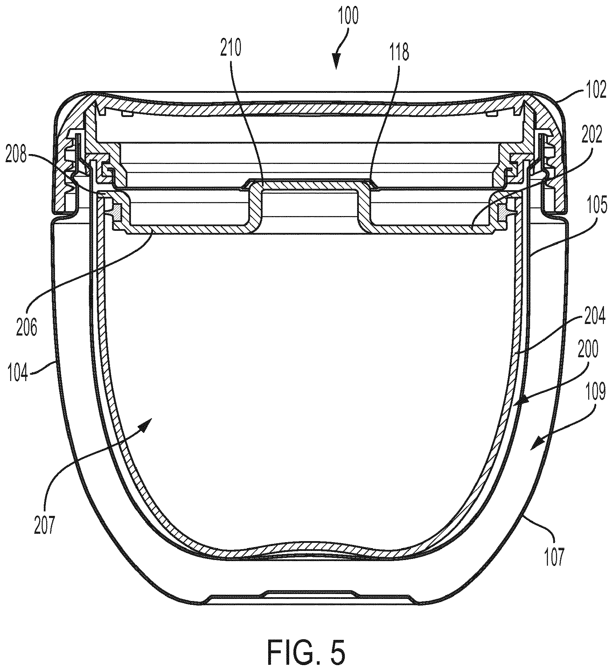

In some embodiments, it is desirable for the container body 104 and the container lid 102 to be formed of an insulating material that is capable of retaining the temperature of the contents for extended periods of time. For example, in some embodiments, the container body 104, the container lid 102, or some combination thereof are formed of a multiple walls, including, but not limited to, ThermaS'well™ technology including a copper layer. For example, as shown in FIG. 5, the container body 104 includes a first wall member 105 and a second wall member 107 positioned adjacent the first wall member 105. A region 109 between the first wall member 105 and the second wall member 107 may be a vacuum for providing insulative properties. In some embodiments, a copper layer may be provided on at least one of an exterior surface of the first wall member 105 or an interior surface of the second wall member 107. However, in other embodiments the container lid 102, container body 104, or some combination thereof may be formed of another suitable insulating material. Moreover, the container lid 102, container body 104, or any combination thereof, may be formed of materials that prevent the food container 100 from breaking upon impact. For example, the container body 104 and the container lid 102 may be built to protect the removable insert 200 from breaking when the food container 100 is dropped or otherwise subject to an impact. The container body 104 and/or container lid 102 may be formed of, but is not limited to, metallic materials (e.g. stainless steel), polymeric materials (e.g., polyethylene, polypropylene, polyvinyl chloride, polystyrene, Nylon, polytetrafluoroethylene, etc.), or other suitable materials. In some embodiments, the food container 100 may be formed of glass, ceramic, or other suitable materials. While the container body 104 and the container lid 102 may be formed of the same material, they need not be. By way only of example, the container body 104 may be formed of stainless steel and the container lid 102 may be formed of a polymeric material. Moreover, it is contemplated that the container body 104 and the container lid 102 may be formed of more than one material. By way only of example, it is conceivable that an additional material (e.g., plastic, rubber, etc.) may be provided to cover the exterior of at least a portion of the food container that is formed of a first material (e.g., stainless steel). In some embodiments, the food container 100 may be formed such that it is opaque or clear. Moreover, decorative designs or other aesthetics may be provided on the exterior of the container body 104, the container lid 102, or any combination thereof.

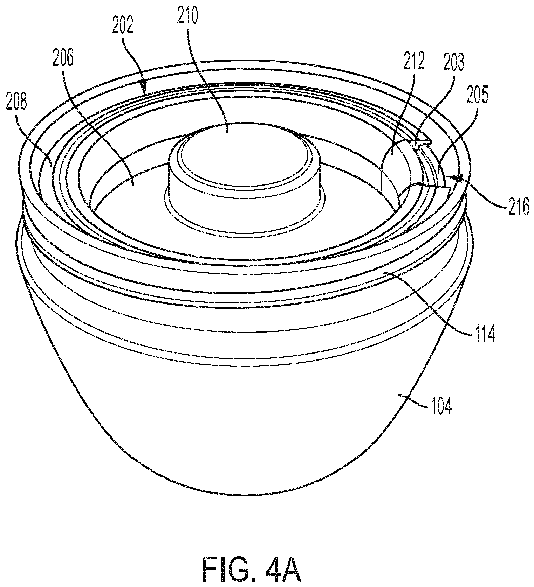

In some embodiments, food products may be deposited directly into the container cavity 106 of the food container 100. In other embodiments, the removable insert 200 may receive a food product within the insert cavity 207 of the insert body 204, the food product may be retained within the insert body 204 by an insert cap 202, as shown in FIG. 1. As shown in FIG. 4A, the removable insert 200, for example the removable insert 200 with food therein, may be positioned within the container body 104 of the food container 100. In some embodiments, as illustrated in the cross-sectional side view depicted in FIG. 5, the removable insert 200 may be fully contained within the food container 100 such that no part of the removable insert 200 extends beyond the food container 100 when the food container system 10 is fully assembled. While the shape of the removable insert 200 may be complementary to that of the food container 100 in which it is to be positioned (shown in FIG. 5), this is not a requirement.

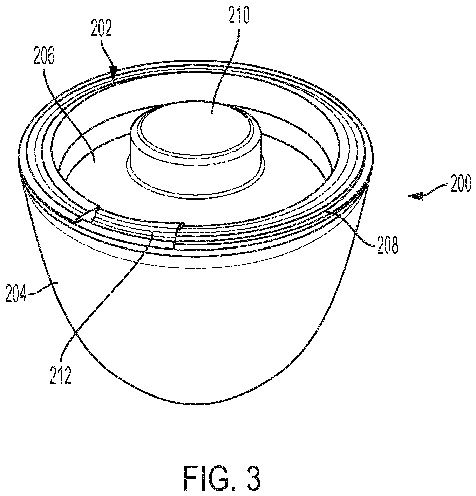

As shown in FIG. 2, the container lid 102 of the food container 100 may include an inner surface 116 that bears against an outer surface of the insert cap 202 (not shown in FIG. 2) when the food container system 10 is assembled with the removable insert 200 positioned within the food container 100. For example, the inner surface 116 of the container lid 102 may bear against an outer portion of the insert cap that may define a ledge 208 of the insert cap 202 (shown in FIG. 3) when the container lid 102 engages the container body 104. In some embodiments, the inner surface 116 of the container lid 102 may include a depression 118. As shown in FIG. 5, the depression 118 may be shaped to receive a projection 210 of the insert cap 202 when the container lid 102 engages the container body 104. Regardless of the particular method, the pressure applied by the container lid 102 against the insert cap 202 may aid in retaining the insert cap 202 in place such that it does not disengage from the insert body 204 during transport of the assembled food container system 10.

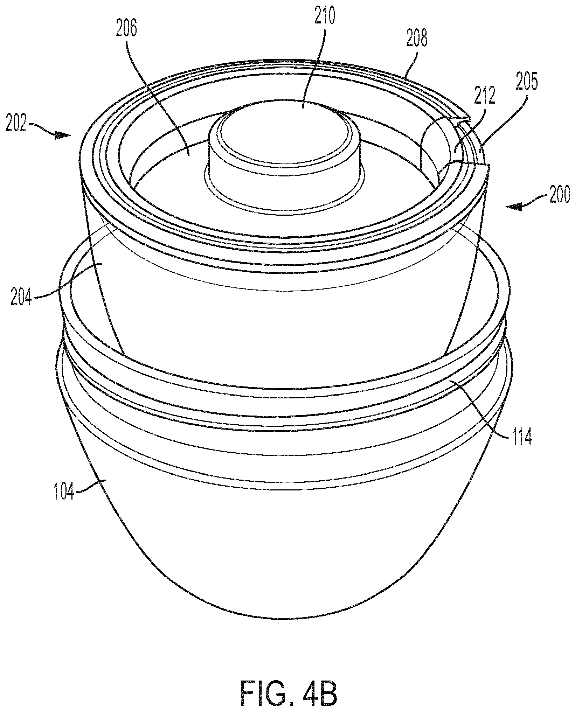

As illustrated in FIGS. 1,3, 4A, and 4B, the removable insert 200 may include the insert body 204 and the insert cap 202. However, in some embodiments, only an insert body 204 may be provided. The insert cap 202 may be provided to cover the insert body 204 to contain a food product within the insert body 204. The insert cap 202 may engage with, and seat within, an opening of the insert body 204. In some embodiments, the insert cap 202 may be press fit onto the insert body 204. However, other engagement methods could be used, including, but not limited to, a threaded connection, a snap-fit connection, a twist-lock connection, or any other suitable engagement method. In some embodiments, the connection between the insert cap 202 and the insert body 204 may be strong enough such that the removable insert 200 can be lifted from the container body 104 by the insert cap 202 without the insert cap 202 disengaging from the insert body 204, as shown in FIG. 4B.

As shown in FIGS. 1 and 3, the insert cap 202 may include an inner portion 206 that is dimensioned to fit within the insert body 204 and thereby seal the contents within the insert body 204. The insert cap 202 may include a seal or a gasket 203 to aid in sealing the insert cap 202 to the insert body 204. The gasket 203 may include a tab extending from a body of the gasket to provide a gripping surface for the user. For example, a user may grip the tab to uncouple the gasket 203 from the insert cap 202 such that a user can easily clean the gasket 203. In some embodiments, the insert cap 202 may include the outer portion that may define the ledge 208 that extends from the inner portion 206 and rests atop an upper rim 205 of the insert body 204, as shown in FIGs. 3 and 5. The abutment between the ledge 208 of the insert cap 202 and the upper rim 205 of the insert body 204 may aid in limiting the extent to which the insert cap 202 can be inserted into the insert body 204, for example, to prevent the insert cap 202 from becoming lodged or stuck within the insert body 204.

As illustrated in FIG. 3, in some embodiments, a portion of the insert cap 202 may extend above another portion of the upper surface of the insert cap 202 to form a projection 210. The projection 210 may provide a gripping surface to aid a user in removing the removable insert 200 from the container body 104 (shown in FIG. 4B). As discussed above, a user can remove the removable insert 200 from the container body 104 by gripping the projection 210 and lifting the removable insert 200 from the container body 104. The projection 210 can be various shapes, including, but not limited to, circular, rectangular, square, triangular, or any other suitable shape. In some embodiments, the projection 210 may also be used as a grip for removing the insert cap 202 from the insert body 204 when the removable insert 200 has been removed from the food container 100.

As shown in FIGS. 3, 4A, and 4B, the insert cap 202 may include one or more features to assist in the removal of the insert cap 202 from the insert body 204. In some embodiments, a cut-out 216 is provided along the circumference of the insert cap 202, the cut-out 216 may define a tab 212. The tab 212 may aid in a user removing the insert cap 202 from the insert body 204 by providing a location from which a user can pull. However, other types of features to assist with the removal of the insert cap 202 are contemplated herein. For example, in some embodiments, a tab, projection, or other feature may be provided for gripping and pulling the insert cap 202 from the insert body 204. In other examples, the insert cap 202 may include an outer perimeter that may extend beyond an upper edge of the insert body 204 thereby providing a surface from which a user can grip to remove the insert cap 202 from the insert body 204.

The insert body 204 and the insert cap 202 maybe formed of the same materials described above for use in the container lid 102 and the container body 104. In some embodiments, the insert body 204 and insert cap 202 may be formed of different materials than those used for the container lid 102 and the container body 104. For example, the insert body 204, the insert cap 202, or any combination thereof, may be formed from a material that is microwave safe such that a user can remove the removable insert 200 from the container body 104 and warm the removable insert 200 (or simply the insert body 204) along with its contents in a microwave. In some embodiments, the insert body 204 and/or the insert cap 202 is formed of a material that is dishwasher safe. In some embodiments, the insert body 204 and/or the insert cap 202 is formed of a polymeric material that is chemically safe, including a polymeric material that is free of bisphenol A (BPA), bisphenol S (BPS), and/or other bisphenols, for example but not limited to Tritan™ plastic. In this disclosure, being "free of' BPA and/or BPS includes having less than .1 parts per million (ppm) of the material. In some embodiments, the insert body 204 and/or the insert cap 202 may be formed of glass, including tempered glass which may reduce the potential of breaking. In other embodiments, the insert body 204 and/or insert cap 202 may comprise other suitable materials including but not limited to polymeric materials, ceramic materials, etc. The insert body 204 and/or the insert cap 202 may be free of any estrogenic and androgenic activity and may be shatter resistant. The insert body 204 and/or insert cap 202 may be opaque or clear. In some embodiments, the insert body 204 is clear such that a user can see a food product positioned therein and optionally gauge the progress of heating the insert contents in a microwave. As described above, in some embodiments, the container body 104, container lid 102, or some combination thereof, may be formed of an insulating material such that it provides insulation and temperature regulation for the removable insert 200 and the food products contained therein. For example, the insulating properties of the container lid 102 and/or the container body 104 may keep the food product contained within the removable insert 200 at a cool temperature (i.e., prevents the food product from getting warm due to ambient temperatures). Alternatively, the food product in the removable insert 200 may be heated prior to being inserted within the container body 104 and the food product can be kept hot due to the insulating properties of the container body 104 and/or the container lid 102.

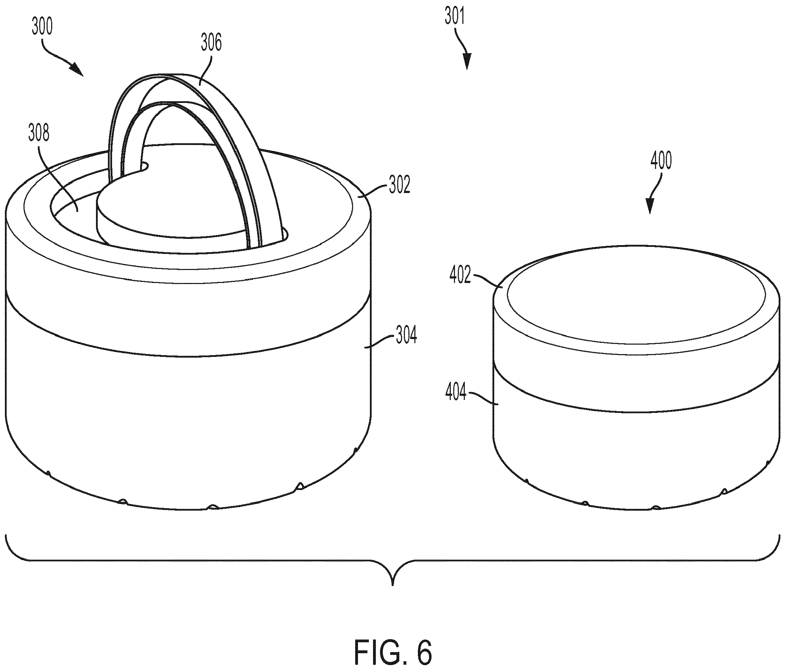

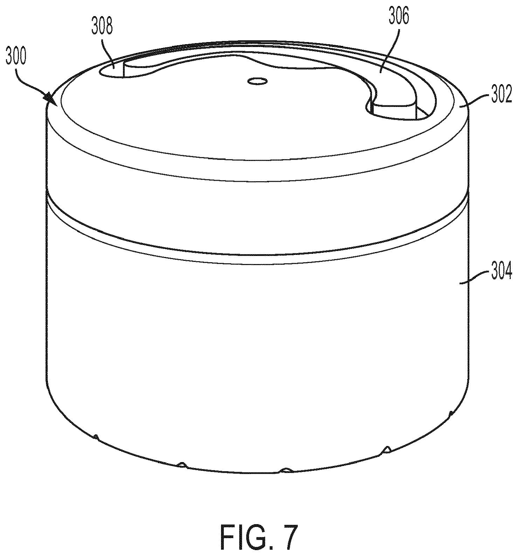

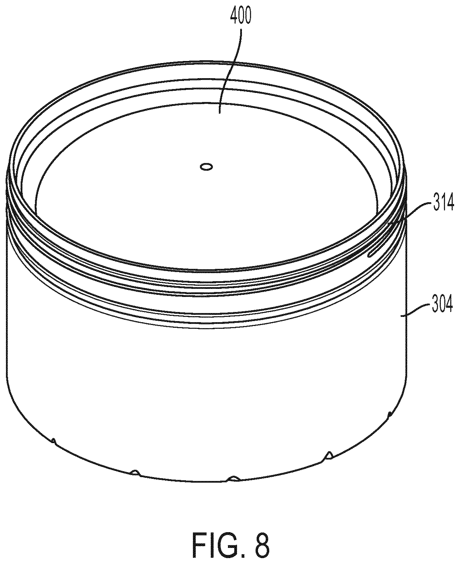

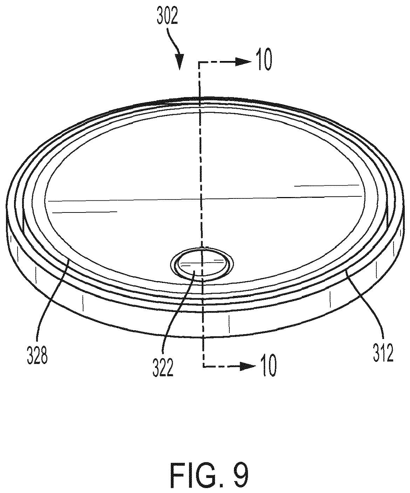

FIG. 6 depicts a perspective view of a food container system 301 according to an alternative embodiment of the present invention. The food container system 301 may include a food container 300 and an additional food container 400. The food container 300 may be sized and shaped to receive the additional food container 400 nested therein. The food container 300 may include a handle 306 on a container lid 302. The handle 306 is pivotally connected to the container lid 302. The handle 306 is configured to have a stowed position, as illustrated in FIG. 7. In the stowed position, the handle 306 rests in a channel 308 formed in a top surface of the container lid 302. When the handle 306 is in the stowed position the handle 306 may not extend above the top surface of the container lid 302 such that the food container 300 can be stacked on other items, including but not limited other food containers (e.g. food containers 300 and/or 400). As illustrated in FIG. 6, the handle 306 may be pivoted upwardly with respect to the upper surface of the container lid 302 to a deployed position. In the deployed position, the handle 306 may be gripped by the user for carrying or transporting the food container 300. A user may also apply torque to the handle 306 in the deployed position to help disengage the container lid 302 from a container body 304 in aspects in which the container lid 302 is coupled to the container body 304 via threaded engagement. The food container 300 may include at least one container body thread 314 (see FIG. 8) disposed on an outer wall of the container body 304 and at least one container lid thread 312 (see FIG. 9) disposed on an inner surface of the container lid 302. The at least one container body thread 314 may interdigitate with the at least one container lid thread 312 to retain the container lid 302 on the container body 304 in a similar manner as described with respect to the food container 100. Moreover, as discussed above with respect to the food container 100, the container lid 302 may engage the container body 304 by any other suitable methods, including, but not limited to, snap-fit connection, twist-lock connection, or any other suitable connection.

As shown in FIG. 6, the additional food container 400 may include a container lid 402 and a container body 404. Moreover, in some embodiments, the container lid 402 may include a handle (not shown) to provide a user with a convenient means of carrying the additional food container 400.

As shown in FIGS. 6 and 8, the additional food container 400 may be sized and shaped to nest within the container body 304 of the food container 300. The nested configuration provides a convenient means of storing and transporting the food container 300 and the additional food container 400. For example, a user can store the additional food container 400 within the container body 304 after use (i.e., after the food product or contents have been consumed and/or removed) and transport or store the food container 300 and the additional food container 400 together thereby reducing the overall space required to store and/or transport the food containers 300, 400.

The additional food container 400 may be formed in a similar manner as the food container 300. As discussed with respect to the food container 100, the food container 300 and/or the additional food container 400 may be formed of any of the materials identified with respect to the food container 100, for example, but not limited to, metallic materials (e.g. stainless steel), polymeric materials (e.g., polyethylene, polypropylene, polyvinyl chloride, polystyrene, Nylon, polytetrafluoroethylene, etc.), or other suitable materials. In some embodiments the food container 300 and/or additional food container 400, may be formed of glass, ceramic, or other materials. Furthermore, in some embodiments, the food container 300 and/or the additional food container 400 may be formed of an insulating material that is capable of retaining the temperature of the contents of extended periods of time, as described above with respect to the food container 100. For example, the food container 300 and/or the additional food container 400 may include a first wall member and second wall member similar to the first wall member 105 and second wall member 107 as described above with respect to the food container 100. Moreover, as described above with respect to the food container 100, the food container 300 and/or the additional food container 400 may include a region between the first and second wall members that may be a vacuum providing insulative properties. Additionally, as described above with respect to the food container 100, the food container 300 and/or the additional food container 400 may include a copper layer provided on at least one of an exterior surface of the first wall member or an interior surface of the second wall member. In some embodiments, the additional food container 400 may be configured to be similar to the previously described removable insert 200. For example, the additional food container 400 may be formed of a microwaveable material such that a food product can be heated directly in the additional food container 400 and stored within the food container 300 in a similar manner to the removable insert 200 described above. In some embodiments, an insert, such as removable insert 200, may be positioned within the food container 300 and/or the additional food container 400.

FIG. 9 depicts a top view of the container lid 302. As shown in FIG. 9, the container lid 302 may optionally include a gasket 328 and a release valve 322. The gasket 328 may engage with the container body 304 to help seal the container lid 302 to the container body 304. While the gasket 328 has been described with reference to the container lid 302, the gasket 328 may be used in conjunction with any of the container lids described above (e.g., container lid 102, insert cap 202, and/or additional container lid 402).

Due to the heating and cooling of the contents of the food container 300, pressure may develop in the food container 300 during use. This pressure may be positive or negative, relative to atmospheric pressure, depending on the food contents, temperature, and use scenario. A negative pressure, in particular, may form a vacuum within the food container 300. For example, when a heated food product is positioned within the container body 304 and the food product begins to cool, the change in temperature causes a change in pressure resulting in a negative pressure formed within the food container 300 with respect to surrounding the atmospheric pressure. The negative pressure results in a vacuum thereby creating a seal between the container lid 302 and the container body 304 such that it makes it difficult for a user to decouple the container lid 302 from the container body 304. The release valve 322 may act as either a pressure release, a vacuum release, or both. By way only of example, the release valve 322 may be a vacuum release valve that helps dissipate negative pressure that can build up in the food container 300 when the contents cool, thus rendering the removal of the container lid 302 from the container body 304 more difficult.

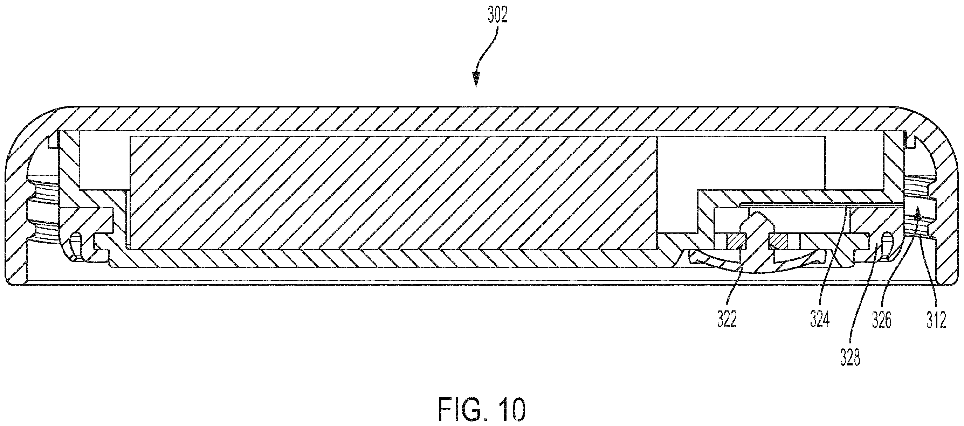

For example, as shown in the cross-sectional view of the container lid 302 in FIG. 10, the container lid 302 may include the release valve 322 and an air channel 324 that is in fluid communication with a space 326 formed between the container lid threads 312 of the container lid 302. When the negative pressure builds up in the container body 304, the release valve 322 deforms allowing airflow into the air channel 324 and into the space 326 thereby allowing a user to more easily decouple the container lid 302 from the container body 304. According to certain embodiments, the release valve 322 may be an umbrella valve. However, other types of pressure or vacuum release valves may be used in embodiments of the food containers disclosed herein. While the release valve 322 has been described above with reference to the container lid 302, the release valve 322 may be used in conjunction with any of the container lids described above (e.g., container lid 102, insert cap 202, and/or container lid 402).

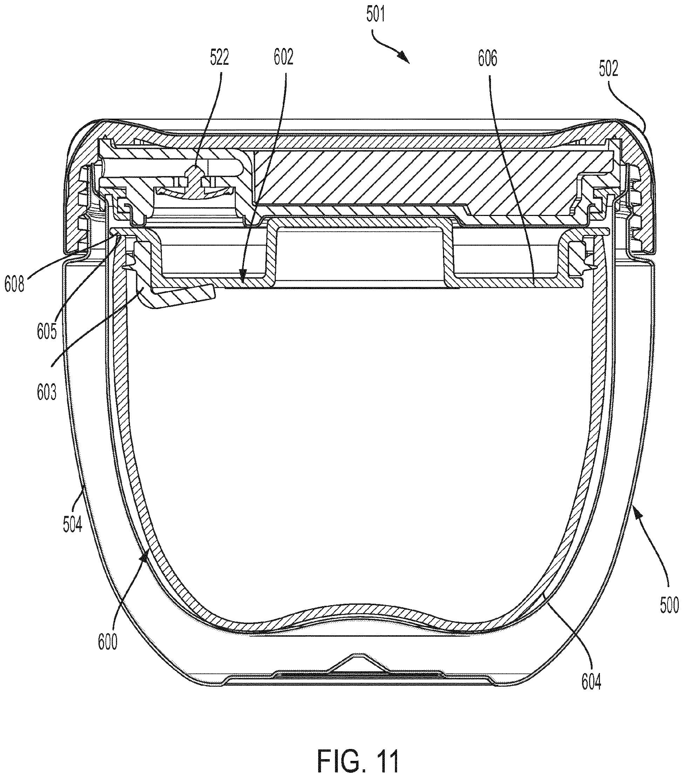

FIG. 11 depicts a cross-sectional view of a food container system 501 having a food container 500 and removable insert 600, according to an alternative embodiment of the present invention. The food container 500 may include the same or different features as the food containers 100, 300, 400, described above. The food container 500 may include a container body 504 and a container lid 502 configured to be coupled to the container body 504 in a similar manner as previously described with respect to food container 100. The container lid 502 may include a release valve 522 that may be the same as the release valve 322 described above. Moreover, the container body 504 and the container lid 502 may be formed of any of the materials identified with respect to the food container 100, for example, but not limited to, metallic materials (e.g. stainless steel), polymeric materials (e.g., polyethylene, polypropylene, polyvinyl chloride, polystyrene, Nylon, polytetrafluoroethylene, etc.), or other suitable materials. Furthermore, in some embodiments, the food container 500 may be formed of an insulating material that is capable of retaining the temperature of the contents of extended periods of time, as described above with respect to the food container 100. For example, the food container 500 may include a first wall member and second wall member similar to the first wall member 105 and second wall member 107 as described above with respect to the food container 100. Moreover, as described above with respect to the food container 100, the food container 500 may include a region between the first and second wall members that may be a vacuum providing insulative properties. Additionally, as described above with respect to the food container 100, the food container 500 may include a copper layer provided on at least one of an exterior surface of the first wall member or an interior surface of the second wall member.

The removable insert 600 may have the same features as the removable insert 200, described above. In some embodiments, the removable insert 600 includes an insert cap 602 configured to be coupled to an insert body 604. The insert cap 602 may include a seal or a gasket 603 to aid in sealing the insert cap 602 to the insert body 604. The insert cap 602 may further include an outer portion that may define a ledge 608 that extends from an inner portion 606 of the insert cap 602 and rests atop an upper rim 605 of the insert body 604. The abutment between the ledge 608 of the insert cap 602 and the upper rim 605 of the insert body 604 may aid in limiting the extent to which the insert cap 602 can be inserted into the insert body 604, for example, to prevent the insert cap 602 from becoming lodged or stuck within the insert body 604. The ledge 608 may provide a gripping portion for a user to remove the insert cap 602 from insert body 604. The removable insert 600 maybe formed of any of the materials previously discussed with respect to the removable insert 200, including but not limited a polymeric material that is free of bisphenol A (BPA), bisphenol S (BPS), and/or other bisphenols, for example but not limited to Tritan™ plastic, a ceramic material (e.g., a glass material, a tempered glass material, etc.).

Different arrangements of the components depicted in the drawings or described above, as well as components and steps not shown or described are possible. Similarly, some features and sub-combinations are useful and may be employed without reference to other features and sub-combinations. Examples of the invention have been described for illustrative and not restrictive purposes, and alternative examples will become apparent to readers of this patent. Accordingly, the present invention is not limited to the examples described above or depicted in the drawings, and various examples and modifications may be made without departing from the scope of the claims below.

## Claims

1. A food container system comprising:
a food container comprising a container body defining a container cavity and a container lid adapted to couple with the container body to enclose the container; and
a removable insert configured to receive a food item and comprising an insert body defining an insert cavity and an insert cap adapted to couple with the insert body to enclose the insert cavity,
wherein the removable insert is sized and shaped to be received within the container cavity such that the container lid may be coupled to the container body when the removable insert is positioned within the container cavity.

2. The food container of claim 1, wherein the food container comprises a wall including: (a) an inner wall member and (b) an outer wall member, and (c) a vacuum space located between the inner wall member and the outer wall member.

3. The food container of claims 1 or 2, wherein a portion of the insert cap extends above an adjacent portion of the insert cap so as to define a projection for removing the removable insert from the container cavity.

4. The food container of claims 1, 2 or 3, wherein the container lid further comprises a valve for dissipating negative pressure formed within the food container.

5. The food container of any preceding claim, wherein the insert body comprises a polymeric material or a glass.

6. The food container of any preceding claim, wherein a portion of the insert cap extends over an edge of the insert cap for aiding in uncoupling the insert cap from the insert body.

7. The food container of any preceding claim, wherein the insert cap further comprises a gasket.

8. The food container of claim 3, wherein the container lid includes a projection for bearing against the projection of the insert cap when the container lid is coupled to the container body with the removable insert positioned within the container cavity for aiding in preventing the insert cap from disengaging from the insert body when the removable insert is positioned within container cavity and the container lid is coupled to the container body.

9. A food container system comprising:
a food container including (a) a container body formed of a metallic material, the container body defining a container cavity, and (b) a container lid coupleable to the container body; and
a removable insert configured to receive a food item, the removable insert comprising a non-metallic material;
wherein the removable insert is positionable within the container cavity such that container lid is coupleable to the container body when the removable insert is positioned within the container cavity; and
wherein the container lid contacts an upper surface of the removable insert when the removable insert is in a nested position within the container body.

10. The food container system of claim 9, wherein the container body comprises a wall further comprising a first wall member and a second wall member, wherein the first and second wall members are separated by a vacuum.

11. The food container system of claims 9 or 10, wherein the removable insert comprises a body portion and a lid, and wherein the body portion comprises a polymeric material.

12. The food container system of claim 11, wherein the polymeric material does not include bisphenol A or bisphenol S.

13. The food container system of any of claims 9 to 12, wherein the container lid further comprises a release valve for dissipating negative pressure formed within the food container.

14. The food container of any of claims 9 to 13, wherein the removable insert comprises:
an insert body; and
an insert cap coupleable to the insert body; and
wherein a portion of the insert cap extends above an adjacent portion of the insert cap so as to define a projection for removing the removable insert from the container cavity.

15. The food container system of claim 14, wherein the insert body comprises a transparent material.
